# EUROPEAN PATENT APPLICATION

(11) **EP 3 223 155 A1**
(43) Date of publication of application: **27.09.2017**
(21) Application number: 16305345.7
(22) Date of filing: 25.03.2016
(51) Int. Cl.: G06F 9/45, G06F 9/44, G06F 9/54

(54) **METHOD FOR COMPUTING EQUIVALENCE BETWEEN TWO EXECUTION MODELS**

(71) Applicant: WORLDLINE, 95870 Bezons (FR)
(72) Inventor: BRODU, Etienne, 95870 BEZONS (FR)
(74) Representative: Louiset, Raphaël

(57) **Abstract**

There is provided a method allowing a seamless shift of focus to follow the development of a web application from the productivity required in the early beginning until the efficiency required during maturation. This method comprises, first, the transformation of a mono-threaded, event driven application to run on parallel pipeline architecture, and, second, the distribution of the global memory into isolated stages of the pipeline.

## Description

### FIELD OF THE INVENTION

The invention generally relates to web application development.

### BACKGROUND OF THE INVENTION

The growth of a real-time web service is partially due to Internet's capacity to allow very quick releases of a minimal viable product (MVP). It is crucial for the prosperity of such project to quickly validate that it meets the needs of its users.

Hence, at the beginning of a web application project, the development team quickly concretizes an MVP using a feature-driven approach and iterates on it. The service needs to be scalable to be able to respond to other growth of its user-base. However, feature-driven development best practices are hardly compatible with the required parallelism. The features are organized in modules which disturb the organization of a parallel execution.

Eventually the growth requires discarding the initial approach to adopt a more efficient processing model. Many of the most efficient models decompose applications into execution units.

However, these tools are in disruption from the initial approach. This shift causes the development team to spend development resources in background to start over the initial code base, without adding visible value for the users.

It is a risk for the evolution of a web application project. The risk described above comes from a disruption between the two levels of application expression, the feature level and the execution level.

### SUMMARY OF THE INVENTION

To avoid this risk and allow a continuous development process, there is a need of a tool which permits to automatically map one level onto the other, and to make the transition, focusing on web applications driven by users' requests and developed in JavaScript using the Node.js execution environment. JavaScript is widely adopted to develop web applications, and its event-loop model is very similar to pipeline architecture.

There is provided a method to provide the equivalence between two execution models to allow a continuous shift from productivity to efficiency, in the context of developing web application using Node.js. The equivalence maps programs written for the event-driven execution model onto the pipeline execution model. It is based on the identification of rupture points in the asynchronous control-flow. These ruptures points are the boundaries between the stages of the pipeline model. A method is proposed to extract, and isolate these stages to execute them in parallel in the fluxional execution model.

The fluxional execution model executes an application expressed as a network of fluxions. This is an independent execution container at the function level, communicating by message. The fluxions are executed in parallel to distribute the computation across several cores and increase the performance efficiency of the application.

The compiler identifies and extracts the stages of the asynchronous control flow. The first step of this compiler identifies these stages to express them as a pipeline.

The compiler then isolates each stage so that it can be executed in parallel, on the fluxional execution model. The execution flows from one stage to the other, from the reception of a request until the last stage responds to the request. The stages are isolated, and communicate by message along this pipeline. To communicate the request, and update the other state, they must follow some rules. If a stage needs to access variable from one request to the other, this variable is stored in its context. If a downstream stage needs to read a variable from an upstream stage, the variable is sent as a message in the data-flow of the application. If two stages need to share a variable, they are grouped on the same execution node to safely share parts of their context. Their executions are not parallelized to avoid conflicting accesses.

It is therefore provided a method for computing equivalence between two execution models to allow a continuous shift from productivity to efficiency, in the context of developing web application using Node.js, this method comprising the steps of:
- Identifying rupture points in the application;
- Generating a pipeline representation of the application;
- Distributing a shared memory into independent groups of fluxions;
- Executing the application according to a fluxional execution model.

The above and further objects and advantages of the invention will become apparent from the detailed description of preferred embodiments, considered in conjunction with the accompanying drawings.

### BRIEF DESCRIPTION OF THE DRAWINGS

In the drawings:
**FIG. 1** is a roadmap presenting the two compilers implemented to allow the transformation from an event-driven program into a distributed network of fluxions.
**FIG.2** presents the event-driven execution model.
**FIG.3** presents the pipeline execution model.
**FIG.4** illustrates the difference of memory abstraction between the event-driven model **(****FIG.2****)** and the pipeline model **(****FIG. 3**).
**FIG.5** illustrates a rupture point with only two interleaving chains of handlers (chain 1 and chain 2), but there could be many more chains interleaving.
**FIG.6** illustrates the sequential and causal scheduling of handlers. A global memory requires a sequential scheduling to assure exclusivity of access.
**FIG. 7** illustrates that message passing only requires causal scheduling of handlers which allows parallelism.
**FIG.8** illustrates the equivalence between handlers (in the event-driven execution model) and tasks (in the pipeline model).
**FIG.9** illustrates the distribution of the global memory abstraction with message passing.
**FIG.10** illustrates a chain of continuations.
**FIG.11** illustrates the syntax of the high-level language used to represent a program in the fluxional form.
**FIG.12** illustrates the fluxional execution model toward the example application corresponding to listing 7.
**FIG.13** illustrates a chain of compilations to transform a Node.js application into a fluxional application compliant with the fluxional execution model.
**FIG.14** shows an example of a rupture point interface.
**FIG.15** represents three alternatives used by the fluxional compiler to manage fluxions isolation.

The present description refers to 10 listings, included with the drawings.

**Listing 1** shows an example of a simple application representing two asynchronous functions: app.get and fs.readfile.

**Listing 2** shows an example of a continuation.

**Listing 3** shows an example of a sequence of continuations.

**Listing 4** shows an example of a Promise.

**Listing 5** shows an example of a chain of Promises.

**Listing 6** shows an example of a web application.

**Listing 7** shows an expression in the high-level fluxional language of the example application corresponding to **Listing 6.**

**Listing 8** shows an example of a Due.

**Listing 9** shows nested calls of continuations.

**Listing 10** shows an expression in a chain of Dues corresponding to **Listing 9.**

### DETAILED DESCRIPTION

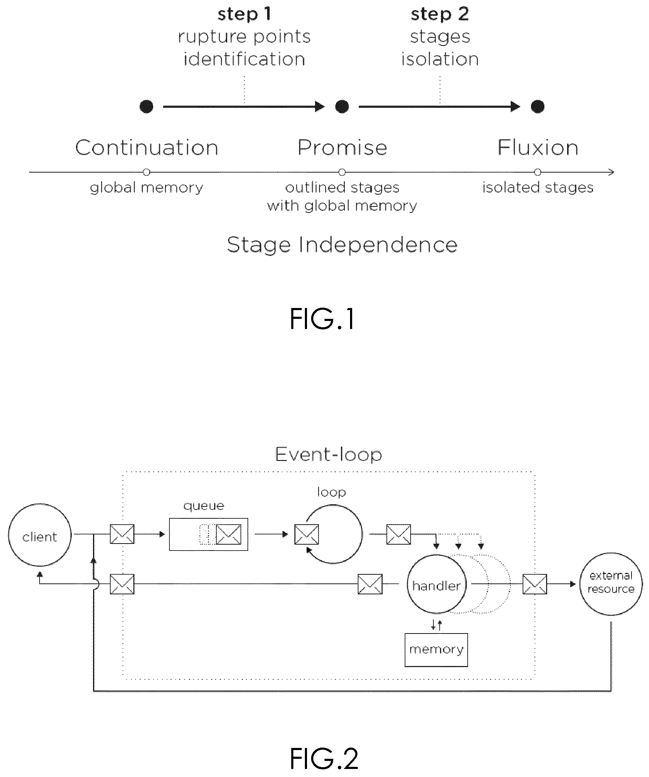

Depicted on **FIG.1** is a method to transform an event-driven program into a distributed network of fluxions. Before explaining the detailed steps presented in **FIG.1****,** the postulates and purposes of the invention are explained first, in order to provide better comprehension of the technique.

JavaScript targets an event-driven execution model, presented in **FIG.2****.** Upon reception, each request from a client queues an event which is waiting to be processed.

A loop queues those events, one at a time, and runs the appropriate handler to process the events. In order to process an event, one handler can query remote resources, which respond asynchronously by queuing additional events.

The querying handler specifies new handlers - called continuations - to process those additional events. Alternatively, one handler may respond directly to the client ending this chain of asynchronous events. The performance of this execution model is limited by the sequential execution required to preserve exclusivity of memory accesses.

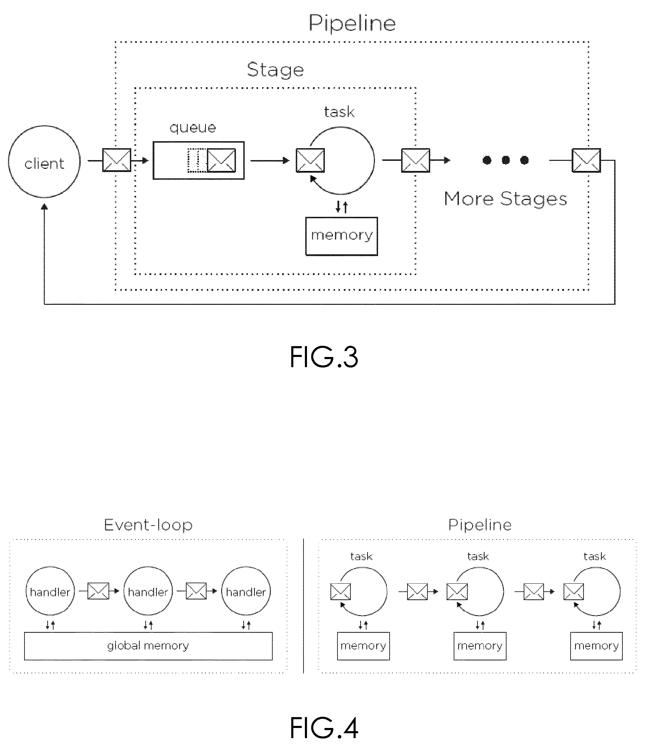

**FIG.3** shows a pipeline execution model which oversteps such performance limitation. The pipeline execution model is composed of isolated stages communicating by message passing to leverage the parallelism of multi-core hardware architectures. Each stage has an independent memory to hold its own state. As the stages are independent, the state coordination between the stages is communicated along with the data stream. The execution model of each stage is organized in a similar fashion as the event loop presented previously. It receives and queues messages from upstream stages, processes them one after the other, and outputs the result to downstream stages.

The difference in the memory abstractions between the two execution models is illustrated in **FIG.4****.** Indeed, in the pipeline architecture, each task is executed on an isolated stage, whereas in the event-driven model all handlers share the same queue, same loop and same memory store. Despite this difference, both execution models present are similar in that they both organize the execution as a sequence of tasks causally scheduled.

The present method proposes equivalence between these two execution models based on such a similarity. Following this equivalence, there is provided a compiler that distributes the global memory into isolated stages of a pipeline. Concretely, it transforms a mono-threaded, event-driven application to run on parallel pipeline architecture.

One object is to allow a continuity of compromises between productivity and efficiency to seamlessly follow the shift of focus during development. At first, the focus remains on the productivity of development rather than the efficiency of execution. The development begins with the event-driven model to take advantage of the productivity of the global memory abstraction.

The execution which results from the transformation is as efficient as the original event-driven execution model. During the maturation of the application, the focus continuously shifts towards efficiency. The transformation distributes the global memory into isolated stages as much as possible. It allows developers to identify the dependencies in this global memory avoiding the distribution. Developers may then identify those dependencies, and arrange the implementation accordingly to allow parallelism. It helps developers to enforce efficiency through continuous iteration, instead of imposing disruptive shifts of technology.

The equivalence between the two execution models is performed in two steps:
- a first step of identifying the stages in the control flow, by detecting rupture points between them;
- a second step of enforcing isolation of memory between the stages identified in the first step, and replacing synchronization with message passing to preserve the invariance.

In the pipeline architecture, each stage has its own thread of execution, which is independent from the other stages, whereas in the event-driven execution model, the handlers are executed sequentially. Despite this difference, the execution of a handler is as independent as the execution of a stage of a pipeline.

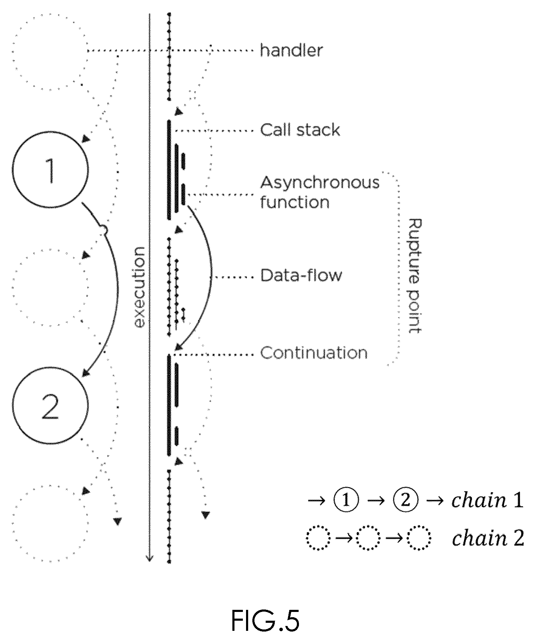

As shown in **FIG. 5**, the call stacks of two handlers are isolated. A handler holds the execution until its call stack is empty, whereby all synchronous function calls terminate. Only then this handler yields the execution to the event-loop, which schedules the next handler. A rupture point separates the call stacks of two handlers. **FIG.5** illustrates a rupture point with only two chains of handlers (chain 1 and chain 2), but there could be many more chains interleaving. Each chain is comparable to a thread in multi-thread programming.

A rupture point is a call of a loosely coupled function. It is an asynchronous call with subsequent synchronization with the caller. It is equivalent to a data flow between two stages in the pipeline architecture. For example, listing 1 illustrates a simple application presenting two asynchronous functions: **app.get** and **fs.readfile**.

A callback is a function passed as a parameter to a function call. It is not inherently asynchronous. Only two kinds of callbacks are asynchronous: listeners and continuations. They are invoked to continue the execution with data which is not yet available synchronously in the caller's context. Listeners listen to a stream of events, and are hence invoked multiple times, whereas continuations are invoked only once to continue the execution after an asynchronous operation is completed. The two corresponding types of rupture points are start and post:
- start rupture points (listeners) are on the border between the application and the outside, and continuously receive incoming user requests. They indicate the input of a data stream in the program, and the beginning of a chain of fluxions to process this stream;
- post rupture points (continuations) represent continuity in the execution flow after an asynchronous operation yielding a unique result, such as reading a file or a database.

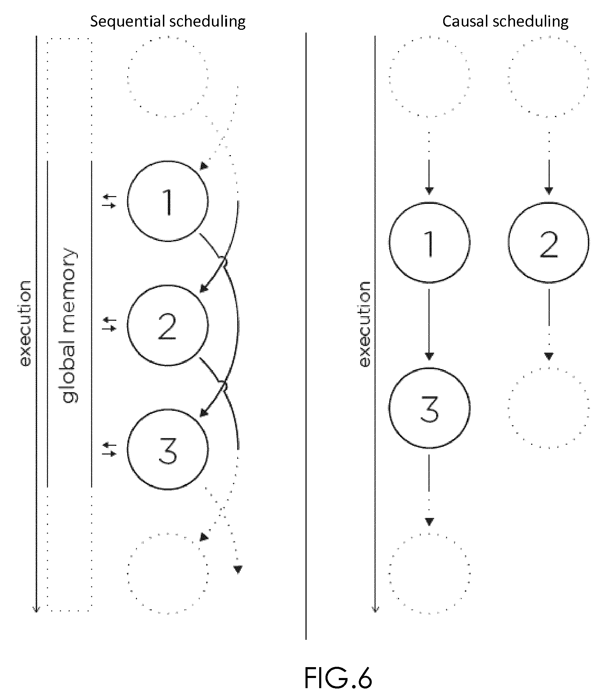

A global memory requires the sequential scheduling of handlers to insure exclusivity of access, as illustrated in **FIG.6****.** The global memory is the only reason for this sequential execution. Yet, the causal scheduling of tasks is sufficient to insure the correctness of the execution.

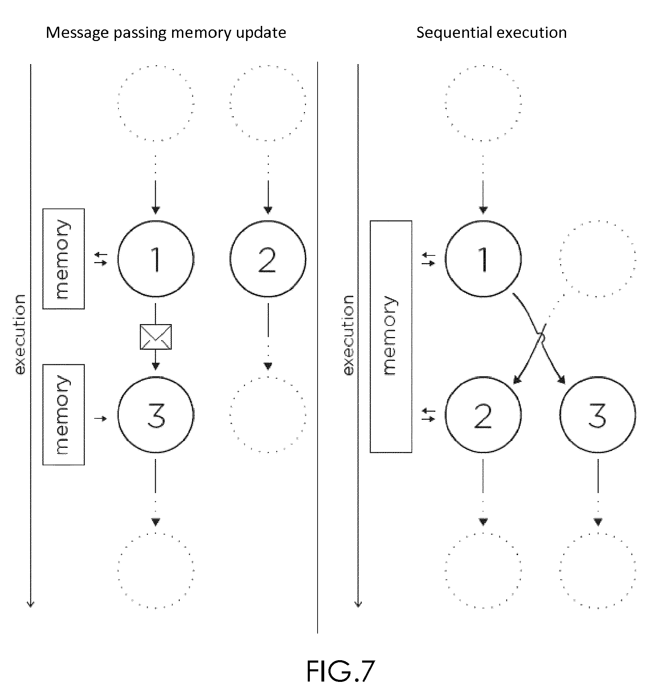

Message passing only require causal scheduling of handlers which allow parallelism, as illustrated in **FIG.7****.** If the handlers didn't rely on the global memory, they could be executed in parallel, as long as their causalities are respected.

Following the three rules explained hereinafter, it is then possible to replace global memory usage of the handler with message-passing, and to parallelize their execution.
- First rule: If a handler uses a variable of two data, then it needs to store it independently from the global memory. The reliance on this memory forces the handler not to be reentrant. There cannot be several instances of the handler execution. The stream of incoming data must be processed sequentially.
- Second rule: If two causally related handlers rely on the same memory region, the causal relation insures the exclusivity of access. Therefore, the global memory can be replaced by sending the updated memory in the data-flow. As illustrated in **FIG.7****,** the upstream handler ① communicates the memory update to the downstream handler ③, each handler having access only to its own memory.
- Third rule: If the downstream handler modifies this memory, it is not possible to isolate it. The upstream handler cannot be notified in due time of this modification. Indeed, the upstream handler might already be processing the next data in the stream. Moreover, if two handlers which are not causally related rely on the same memory region, they can access it in any order. They need to be scheduled sequentially to maintain the exclusivity of access, as illustrated in **FIG. 7**.

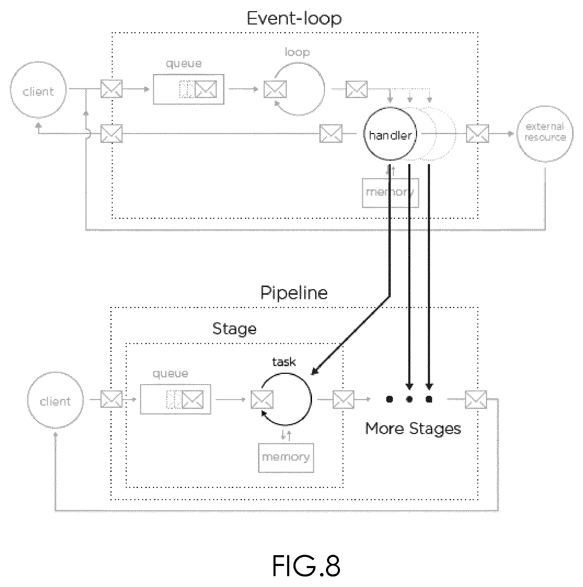

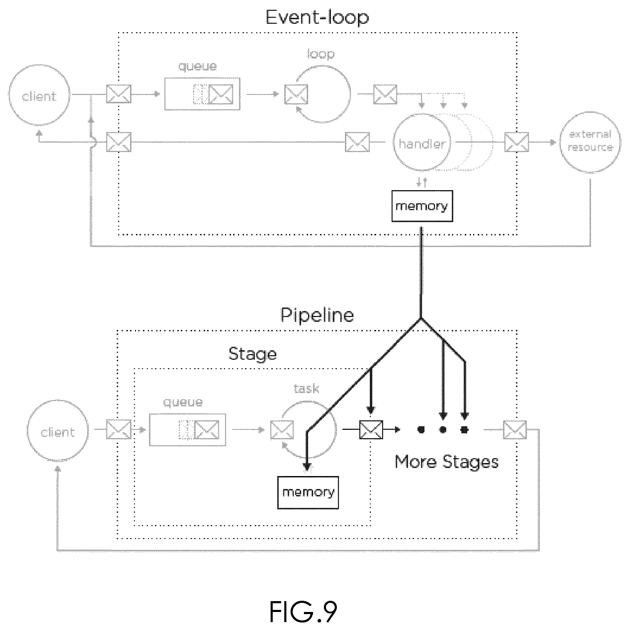

The main goal of the proposed method is to provide the transformation from event-loop to pipeline turning the handlers from the event-driven execution into stages of the pipeline, as illustrated in **FIG. 8**. It further distributes the global memory into these different stages, as illustrated in **FIG. 9**.

The details of the two execution models which matter for this transformation are presented below.

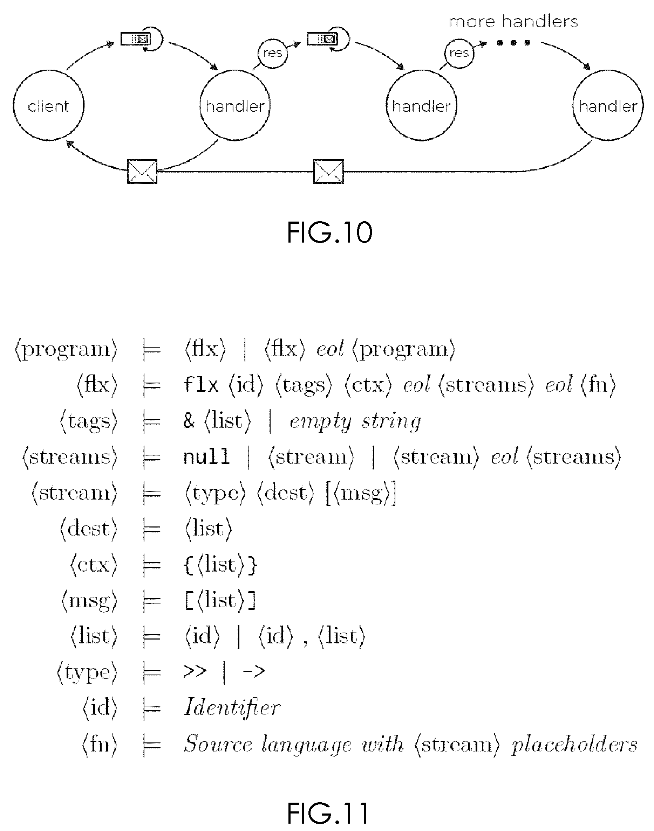

The event-driven execution model processes a queue of asynchronous events by cooperatively scheduling handlers. In order to respond to an event, the associated handler can directly respond to the source of the event. Alternatively, it can request an external resource, and queue another handler to later process the initial event with the resource response, as illustrated in **FIG.10****.** The developer defines each handler as a continuation and defines their causality using the continuation passing style as defined e.g. in Haynes et al, "Continuations and coroutins", ACM Symposium, 1984.

Further details are provided hereinafter on the continuation passing style:
- a continuation is a function passed as an argument to a function call. The continuation is invoked after the completion of the callee, to continue the execution. In the event-driven execution model, the continuation is invoked as a new handler, to avoid blocking the callee until its completion. Unpon its invocation, the continuation retrieves both the caller context and the result of the callee through a closure. **Listing 2** illustrates an example of continuation in Node.js.
- Asynchronous continuations may not be composed to chain their execution like synchronous functions, as illustrated in **Listing 3.**
- As such a nested construction may sometimes be difficult to follow; it is possible to use Promises which improve continuations to allow this composition. They allow arranging a sequence of asynchronous operations in a chain, similar to a pipeline.

A Promise is used as a placeholder for the possible outcome of a deferred (and possibly asynchronous) operation. **Listing 4** illustrates a simple Promise. In JavaScript, promises expose a then method which expects a continuation to continue the execution with the result of the deferred operation.

This method allows to chain Promises one after the other, as illustrated in **Listing 5.** Promises allow to easily arranging the execution flow in parallel or in sequence according to the required causality. It is preferred to arrange the computation as series of steps to process incoming events and yield out coming events. Promises therefore represent an intermediate step toward the pipeline execution model.

A Due is an object used as placeholder for the eventual outcome of a deferred operation. Dues are essentially similar to ECMAScript Promises (http://www.ecma-international.org/ecma-262/6.0/#sec-promise-objects), except for the convention to hand back outcomes. Dues use the error-first convention, like Node.js, as illustrated line 5 in **Listing 8.** The implementation of Dues and its tests are available online (https://www.npmjs.com/package/due).

The fluxional execution model provided by the present method is inspired by the pipeline architecture and is the target for the transformation provided by this method. It executes programs written in the fluxional language, the grammar of which is presented in **FIG. 11**. The functions of an application (program) are encapsulated in autonomous execution containers named fluxions (fix).

A fluxion (fix) is named by a unique identifier (id) to receive messages, and might be part of one or more groups indicated by tags (tags). A fluxion is composed of a processing function (fn), and a local memory called a context (ctx). Upon reception of a message, the fluxion modifies its context, and sends messages to downstream fluxions on its output streams (streams). The context stores the state on which a fluxion relies between two message receptions. The messaging system queues the output messages for the event loop to process them later by calling the downstream fluxions. In addition to message passing, the execution model allows fluxions to communicate by sharing state between their contexts. The fluxions that need this synchronization are grouped with the same tag, and lose their independence.

There are two parts of streams, start and post, which correspond to the nature of the rupture point producing the stream. A start rupture point starts a chain of continuations, while a post rupture point is a continuation in a chain. Start rupture point are indicated with a double arrow and post rupture points with a simple arrow. The variables defined before the start are available for the whole chain, and require synchronization for concurrent execution of the same chain. Whereas the variables defined inside the chain are available only in this chain, and don't require synchronization.

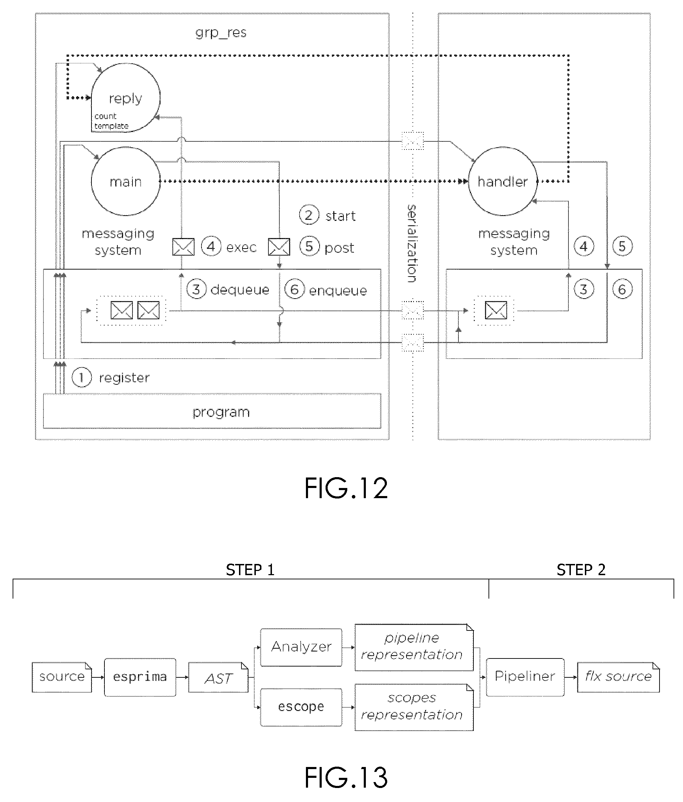

An example of transformation from continuation passing style to the fluxion execution model is illustrated by **Listing 6, Listing 7** and **FIG.12****. Listing 6** shows an example of simple wed application, and **Listing 7** is the corresponding expression in the high-level fluxional language. The fluxional execution of this application is illustrated in **FIG. 12**.

The example application in **Listing 6** reads a file, and sends it back along with a request counter. The handler function, line 5 to 10, receives the input stream of requests. The count variable at line 3 counts the requests, and needs to be saved between two messages receptions.

The template function formats the output stream to be sent back to the client. The app.get and res.send functions (lines 5 and 8) interface the application with the clients. Between these two interface functions is a chain of three functions to process the client requests: app.get >> handler -> reply.

This chain of functions is transformed into a pipeline, expressed in a high level language in **Listing 7.** The execution is illustrated in **FIG.12****.** The dashed arrows between fluxions represent the message streams as seen in the fluxional application. The plain arrows represent the operations of the messaging system during the execution. These steps are indicated by numerated circles.

The program registers its fluxions in the messaging system, ①. The fluxion reply has a context containing the variables count and template. When the application receives a request, the first fluxion in the stream, main, queues a start message containing the request, ②. This first message is to be received by the next fluxion handler, ③, and triggers its execution, ④. The fluxion handler sends back a message, ⑤, to be enqueued, ⑥. The system loops through steps ③ to ⑥ until the queue is empty. This cycle starts again for each new incoming request causing another start message.

The fluxion handler does not have any dependencies, so it can be executed in a parallel event-loop. In **Listing 7,** the fluxions main and reply belong to the group grp_res, indicating their dependency over the variable res. The group name is arbitrarily chosen. All the fluxions inside a group are executed sequentially on the same event-loop, to protect the shared variables against concurrent accesses.

The variable res is created and consumed within a chain of post stream. Therefore, it is exclusive to one request and cannot be propagated to another request. It does not prevent the whole group from being replicated. However, the fluxion reply depends on the variable count created upstream the start stream, which prevents this replication. If it did not rely on this variable, the group grp_res would be stateless, and could be replicated to cope with the incoming traffic.

This execution model permits to parallelize the execution of an application as a pipeline, as with the fluxion handler. Some parts are replicated, as could be the group grp_res. Such parallelization improves the efficiency of the application. Indeed, as a fluxion includes its state and expresses its dependencies, it may be migrated. It allows adapting the number of fluxions per core to adjust the resource usage in function of the desired throughput. Yet, the parallelization is limited by the dependencies between fluxions. Those dependencies may be ignored at first, to focus on productivity, and then continuously tune the implementation to remove these dependencies and improve efficiency. This continuous tuning avoids the disruptive shifts of technology required by current platforms.

There is provided a method for computing the transformation allowed by the equivalence from an event-driven program into a distributed network of fluxions. In one embodiment, the method is incrementally implemented into a pair of compilers following the roadmap shown in **FIG.1**.

The first compiler focuses on the identification of simple chains of causality between continuations to transform these chains into Promises on existing JavaScript project. This compiler automatically transforms an imbrication of continuations into a sequence of Dues. The compilation process is made of two important steps, i.e. an identification of the continuations and their imbrications, and a generation of chains of Dues.

In order to detect continuations, the compiler searches for callbacks. Not all detected callbacks are continuations. A continuation is a callback invoked only once, asynchronously. When the compiler has detected callbacks, it leaves the identification of compatible continuations among these callbacks to the developer.

The second compilation step includes identifying the trees of continuations and trimming the extra branches to transform them into chains. Continuations structure the execution flow as a tree, whereas a chain of Dues arranges it sequentially.

A parent continuation can execute several children, while a Due allows only one chaining. If a continuation has more than one child, the compiler tries to find a single legitimate child to form the longest possible chain. A legitimate child is a unique continuation which contains another continuation to chain.

If there are several continuations that continue the chain, none are the legitimate child. The non-legitimate children start new chains of Dues.

As an example, **Listing 9** represents nested calls of continuations and **Listing 10 is** the corresponding chain of Dues after transformation. In **Listing 9** and **Listing 10,** the continuation cont2 is a legitimate child, whereas cont3 and cont4 are non-legitimate because they are siblings, and none have children. The compiler cannot decide to continue the chain with cont3 or cont4, so it leaves them without modification. This step transforms each tree of continuations into several chains of continuations that translate into sequences of Dues.

As a Due is a placeholder for a single outcome, it does not allow for expressing the recurrence of streaming data. In practice, a Due is created for each data in the stream. Therefore, continuations do not represent the whole streaming pipeline underlying in the application. Listeners are the callbacks starting the streaming pipeline. There is a need for an abstraction for both continuations and listeners. This compiler is then an intermediary step toward the second one, called fluxional compiler.

The fluxional compiler forms a pipeline with both listeners and continuations, and isolates the stages. This compiler computes the equivalence between a global memory abstraction and a distributed memory. It tackles the problems arising from the replacement of the global memory synchronization with message passing. It transforms a JavaScript application into a network of independent parts communicating by message streams and executed in parallel. The first step of the fluxional compiler is the identification of rupture points between fluxions and the second step is the isolation between the fluxions.

The fluxional compiler is implemented as an event-loop to impose a definition of the causality between asynchronous operations. The compiler transforms a Node.js application into a fluxional application compliant with the fluxional execution model described above.

The chain of compilation is described in **FIG.13****.** It uses the estools (https://github.com/estools) suite to parse (esprima), analyze (escope), manipulate (estraverse and esquery) and generate (escodegen) source code from an Abstract Syntax Tree (AST). It is tailored for - but not limited to - web applications using Express (http://expressjs.com/), the most used Node.js web framework. The compiler extracts an AST from the source with esprima.

From this AST, the Analyzer step identifies the rupture points. This first step outputs a pipeline representation of the application. In this pipeline representation, the stages are not independent and encapsulated into fluxions yet. From the AST, escope produces a representation of the memory scopes. The Pipeliner step analyzes the pipeline representation and the scopes representation to distribute the shared memory into independent groups of fluxions.

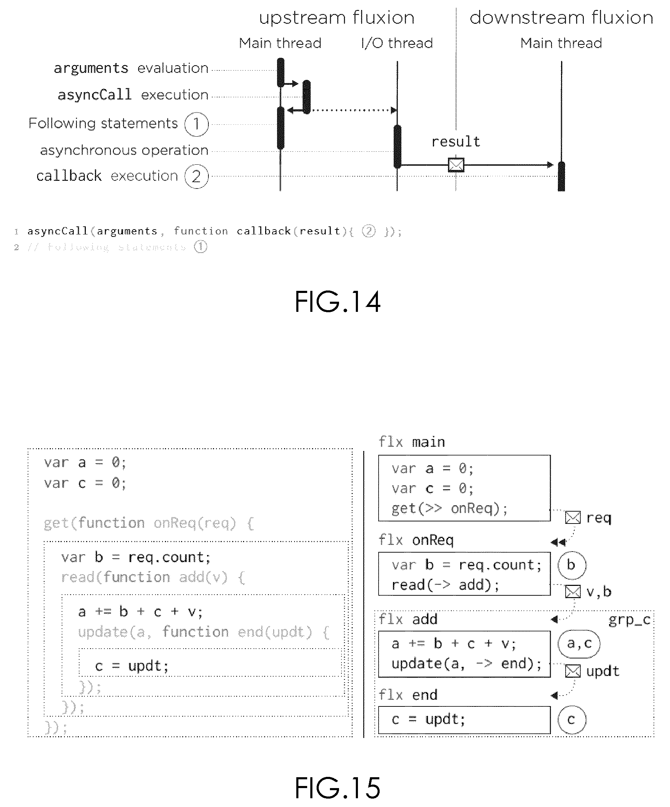

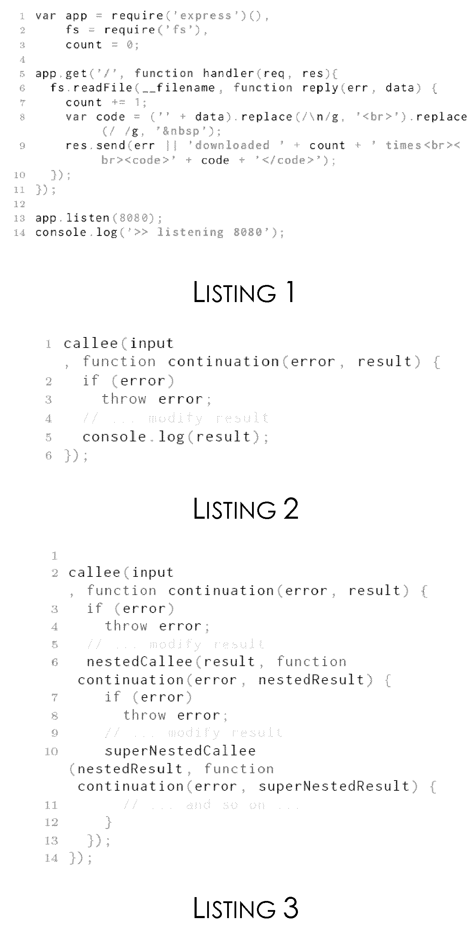

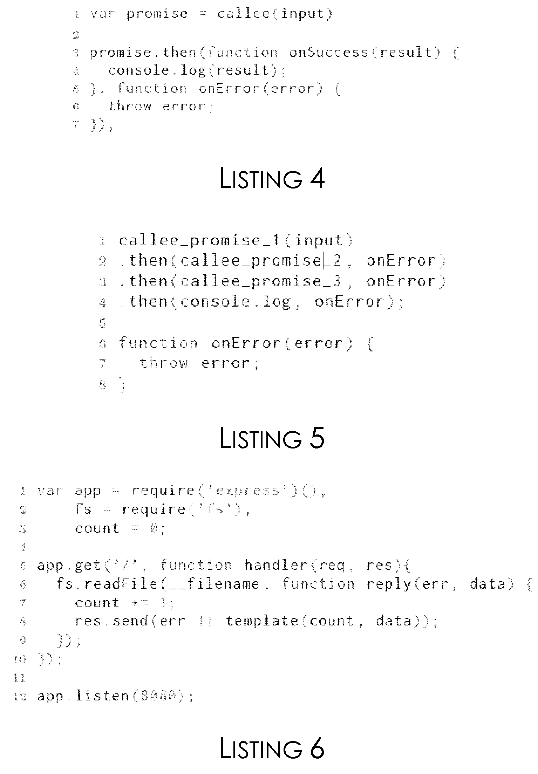

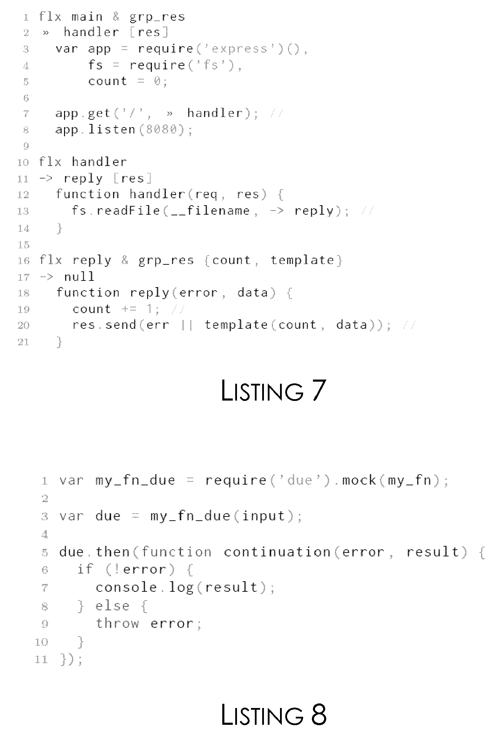

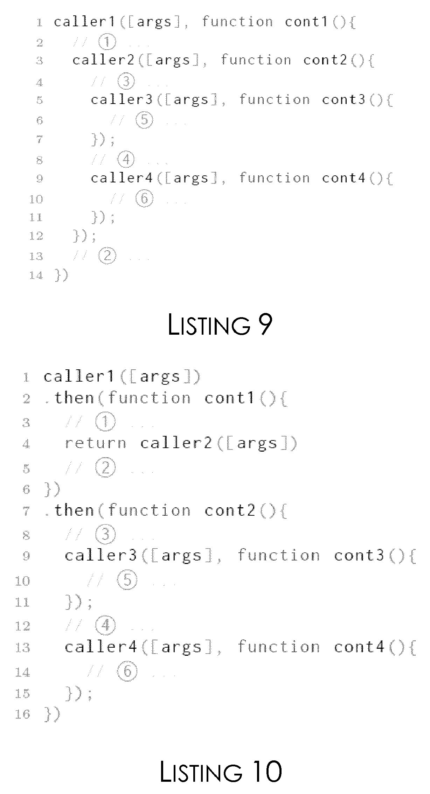

In Node.js, I/O operations are asynchronous functions and indicate rupture points between two application parts. **FIG.14** shows a code example of a rupture point with the illustration of the execution of the two application parts isolated into fluxions. The two application parts are the caller of the asynchronous function call on one hand, and the callback provided to the asynchronous function call on the other hand. The detection of asynchronous callees is done by the developer. It uses a list of common asynchronous callees, like the express and file system methods. This list can be augmented to match asynchronous callees individually for any application.

To identify the callee, the analyzer walks the AST to find a call expression matching this list. After identification of the callee, the callback needs to be identified as well, to be encapsulated in the downstream fluxion. For each asynchronous call detected, the compiler tests if one of the arguments is of type function. The callback functions declared in situ are trivially detected in the AST. The compiler discard callbacks not declared in situ, to avoid altering the semantic by moving or modifying their definitions.

As a rupture point occurs between an asynchronous caller and a callback defined in situ, it eventually breaks the chain of scopes. If the caller and the callback are separated, it breaks the closures of the callback. The callback in the downstream fluxion cannot access the scope of its parent as expected. The pipeliner step replaces the need for this closure, allowing application parts to be isolated, and to rely only on independent memory stores and message passing. It determines the distribution using the scope representation, which represents the variables' dependencies between application parts. Depending on this representation, the compiler can replace the broken closures in three different ways. These three alternatives are presented in **FIG.15**.

First, if a variable is modified inside only one application part in the current post chain, then the pipeliner adds it to the context of its fluxion. In **FIG.15****,** variable a is updated in the function add. The pipeliner step stores this variable in the context of the fluxion add.

Second, if a modified variable is read by some downstream application parts, then the pipeliner makes the upstream fluxion add this variable to the message stream to be sent to the downstream fluxions. It is impossible to send variables to upstream fluxions without causing inconsistencies. If the fluxion retro propagates the variable for an upstream fluxion to read, the upstream fluxion might use the old version while the new version is on its way. In **FIG.15****,** variable b is set in the function onReq, and read in the function add. The pipeliner step makes the fluxion onReq send the updated variable b, in addition to the variable v, in the message sent to the fluxion add. Exceptionally, if a variable is defined inside a post chain, like b, then this variable can be streamed inside this post chain without restriction on the order of modification and read. Indeed, in the current post chain, the execution of the upstream fluxion is assured to end before the execution of the downstream fluxion, because of their causality. Therefore, no reading of the variable by the upstream fluxion happens after the modification by the downstream fluxion.

Third, if a variable is needed for modification by several application parts, or is read by an upstream application part, then it needs to be synchronized between the fluxions. The pipeliner groups all the fluxions sharing this variable with the same tag, and adds this variable to the contexts of each fluxion. As depicted in **FIG.15****,** variable c is set in the function end, and read in the function add. As the fluxion add is upstream from end, the pipeliner step groups the fluxions add and end with the tag grp_c to allow the two fluxions to share this variable.

## Claims

1. Method for computing the transformation of an event driven program, in which functions to perform tasks of the program share a same global memory store, into a distributed network of autonomous execution containers named fluxions which communicate by message passing, each container having an independent memory store to hold data, this method comprising the steps of:
- identifying stages of an asynchronous control flow of the program, i.e. an order in which individual statements, instructions or function calls of a program are executed or evaluated,
- expressing the identified stages in an intermediary pipeline representation, wherein each stage corresponds to an execution container which is not autonomous yet,
- enforcing isolation of the global memory store between the stages,
- replacing the global memory store by message passing, wherein the stages can coordinate together by a stream of data.

2. A computing method according to claim 1, wherein the identification step includes detecting rupture points in the program, each rupture point being a call of a loosely coupled function, typically an asynchronous call with a subsequent synchronization with the caller.

3. A computing method according to claim 1 or 2, further comprising the steps of:
- identifying continuations in the program, wherein a continuation is an asynchronous callback, i.e. a function passed as a parameter to a function call, invoked only once,
- identifying imbrications between the continuations,
- transforming these imbrications into chains of Dues, a Due being a JavaScrispt object used as a placeholder for the enventual outcome of a deferred operation.

4. A method according to claim 3, further including the steps of:
- identifying trees of continuations, a continuation allowing to structure an execution flow as a tree,
- trimming extra branches of the trees to transform them into sequences of Dues, wherein each Due follows the rules below:
o if a parent continuation has more than one child, a single legitimate child is researched and selected to form the longest chain possible, a legitimate child being a unique continuation which contains another continuation to chain,
o if the selected legitimate child has several continuations to continue the chain, none of the continuations are legitimate children and these non-legitimate children start new sequences of Dues.

5. A method according to claim 3 or 4, further comprising the steps of:
- generating an abstract syntax tree, i.e. a tree representation of the program,
- generating a source code from the abstract syntax tree,
- identifying rupture points from the abstract syntax tree, each rupture point being a call to a loosely coupled function, typically an asynchronous call with a subsequent synchronization with the caller.

6. A method according to claim 5, further comprising the steps of:
- detecting any asynchronous function call in the abstract syntax tree,
- walking the abstract syntax tree to find a call expression matching a list of asynchronous function calls,
- for each asynchronous function call detected, testing if one of its arguments is of type function,
- identifying any callback, i.e. any function passed as a parameter to a function call,
- detecting the callbacks declared in situ,
- discarding callbacks not declared in situ,
- producing a representation of the memory scopes of the abstract syntax tree, representing the variable dependencies between application parts, each application part being a caller of an asynchronous function call or a callback,
- encapsulating the application parts into fluxions, each fluxion being an execution container which is expressed in JavaScript with the following characteristics:
o it is named by a unique identifier (id) to receive messages, and might be part of one or more groups indicated by tags (tags),
o it is composed of a processing function (fn), and has a local memory called a context (ctx),
o it has one or several output stream(s) (streams).

7. A method according to claim 6, further comprising the steps of:
- detecting the following cases:
a) a modification of a variable inside only one application part,
b) the reading of a modified variable by some downstream application parts,
c) the need of a variable for modification by several application parts,
d) the reading of a variable by an upstream application part;
- adding a variable in the context of the fluxion corresponding to said application part in case a),
- making an upstream fluxion add the modified variable to the message stream to be sent to downstream fluxions in case b),
- synchronizing a variable between the concerned fluxions in case c) or d), this synchronization comprising the steps of:
o grouping all the fluxions with a same tag,
o adding the variable in the context of each fluxion.

8. A method according to claim 1 or 7, comprising the steps of:
- modifying the context of a fluxion at a message reception,
- storing the state of a fluxion in its context between two message receptions,
- queueing output messages from an upstream fluxion for an event-loop to process them later by calling downstream fluxions.
